# FASCICULE DE BREVET EUROPEEN

(11) **EP 3 433 161 B1**
(45) Date de publication et mention de la délivrance du brevet: **24.02.2021**
(21) Numéro de dépôt: 17717478.6
(22) Date de dépôt: 24.03.2017
(51) Int. Cl.: B62D 25/02, B62D 65/02, B60J 5/04, B60J 5/06

(54) **ENSEMBLE LATERAL AVEC OUVERTURE DE PORTES POUR VEHICULE AUTOMOBILE ET PROCEDE D'ASSEMBLAGE ASSOCIE**
SEITLICHE ANORDNUNG MIT TÜRÖFFNUNG FÜR EIN KRAFTFAHRZEUG UND ENTSPRECHENDES MONTAGEVERFAHREN
LATERAL ASSEMBLY WITH DOORS OPENING FOR MOTOR VEHICLE AND ASSOCIATED ASSEMBLY METHOD

(30) Priorité: 25.03.2016 FR 1652597
(43) Date de publication de la demande: 30.01.2019
(73) Titulaire: RENAULT s.a.s., 92100 Boulogne-Billancourt (FR)
(72) Inventeur: ANFRAY, Philippe, 78790 Saint Martin des Champs (FR); BRABAN, Pascal, 78540 Vernouillet (FR); POULLARD, Christophe, 78640 Neauphle le Vieux (FR)
(86) Numéro de dépôt international: PCT/FR2017/050690
(87) Numéro de publication internationale: WO 2017/162994

(56) Documents cités:
- EP-A1- 0 103 734
- EP-A1- 1 068 970
- JP-A- 2003 237 369
- JP-A- 2004 027 726
- US-A- 2 997 336

## Description

L'invention a pour objet les ouvrants de véhicules automobiles, et plus particulièrement les systèmes de centrage et de verrouillage de portes latérales de véhicules automobiles.

Des dispositifs connus permettent de centrer et/ou de
verrouiller chacune des portes latérales lorsque celle-ci approche de sa position de fermeture puis atteint sa position de fermeture. Les dispositifs connus sont usuellement assemblés, par rapport à l'ouverture de la porte, en partie supérieure ou en partie inférieure du côté de caisse, ou encore qu'au niveau d'un pied milieu du véhicule interposé entre une porte latérale avant et une porte latérale arrière sur toute la hauteur de ces portes.

Dans certaines configurations, on souhaite s'affranchir de la présence d'un pied milieu, tout en conservant la possibilité d'ouvrir séparément l'accès aux passagers avant et l'accès aux passagers arrière du véhicule. On est donc amené à concevoir des véhicules dans lesquels la porte avant et la porte arrière viennent accoster directement l'une contre l'autre.

Se pose alors la question de savoir où disposer les points de centrage et/ou de verrouillage des deux portes. Ces points de centrage et/ou de verrouillage doivent entre autres, permettre d'assurer une bonne continuité entre les surfaces extérieures des deux portes lorsque celles-ci sont fermées, ainsi qu'un bon ajustement des limites des deux portes le long de leur ligne de rencontre.

On connaît des véhicules sans pied milieu, qui sont munis de gâches de verrouillage le long d'un encadrement supérieur et d'un encadrement inférieur des portes, et dont le centrage est par exemple assuré par un rail ménagé dans le côté de caisse. Le rail faisant office d'organe de centrage se trouve alors généralement décalé, suivant la direction verticale, par rapport à la ou aux gâches de fermetures les plus proches, situées par exemple sur le pourtour de l'ouverture des portes.

Du fait des dimensions du rail et de l'étendue de la portion de côté de caisse accueillant à la fois le rail et la gâche, des écarts dimensionnels par rapport aux positions relatives souhaitées des différents éléments de centrage/verrouillage des portes peuvent aisément se produire lors du montage du véhicule.

Le document US2997336A décrit en outre un ensemble latéral de carrosserie pour véhicule automobile, comprenant un côté de caisse avec une baie double, destinée à recevoir conjointement deux portes latérales du véhicule se refermant l'une contre l'autre sans pied milieu au niveau d'une zone vide de la baie double.

L'invention a pour but de proposer un système de centrage et/ou verrouillage pour un couple de portes latérales, adapté à un véhicule sans pied milieu, le système permettant de simplifier le montage du véhicule tout en réduisant les écarts dimensionnels sur le véhicule assemblé, par rapport aux positions relatives souhaitées entre les différents éléments de centrage, et/ou verrouillage.

A cette fin, il est proposé un ensemble latéral de carrosserie pour véhicule automobile, comprenant un côté de caisse avec une baie double, destinée à recevoir conjointement deux portes latérales du véhicule se refermant l'une contre l'autre sans pied milieu au niveau d'une zone vide de la baie double. L'ensemble comprend :
- une pièce rapportée sur le côté de caisse au dessus de la baie ou une pièce rapportée sur le côté de caisse en dessous de la baie, solidarisée au côté de caisse pour dépasser du côté de caisse;
- un premier élément de centrage et/ou de fixation de porte assemblé sur la pièce rapportée ;
- un deuxième élément de centrage et/ou de fixation de porte assemblé sur la pièce rapportée.

La pièce rapportée est assemblée sur le côté de caisse de manière à permettre de refermer puis verrouiller et/ou de centrer une première porte sur le premier élément, et de manière à permettre de refermer puis verrouiller et/ou de centrer une deuxième porte sur le deuxième élément.

Par pièce rapportée sur le côté de caisse au dessus de la baie ou une pièce rapportée sur le côté de caisse dessous de la baie, on entend que la pièce se trouve entièrement du côté haut ou du côté bas de la baie, sans relier verticalement le haut et le bas de la baie. Selon un mode de réalisation, l'élément de centrage peut être assemblé directement sur la pièce rapportée. Par assemblé directement, on entend que l'élément de centrage est soutenu essentiellement par la pièce rapportée, sur laquelle il peut être éventuellement fixé au moyen d'élément de fixations tiers. Il est ainsi possible de fournir lors de l'assemblage du véhicule un sous ensemble comprenant déjà des orifices et/ou des éléments de fixation destinés aux éléments de centrage associés à la pièce rapportée. Selon l'invention, cette pièce rapportée est positionnée au voisinage de l'extrémité d'un rail de guidage horizontal destiné à supporter une des portes, le premier élément de centrage et/ou de fixation étant un élément de centrage destiné à une porte coulissante, et le deuxième élément de centrage et/ou de fixation étant un élément permettant de verrouiller une porte battante.

Selon un mode de réalisation avantageux, la pièce rapportée comporte une portion de coque creuse, dépassant en relief latéralement vers l'extérieur du côté de caisse, notamment par une première face de la coque et par une deuxième face de la coque, les deux faces étant sensiblement verticales et tournées à l'opposé l'une de l'autre. En outre, le premier élément de centrage et/ou de fixation de porte est assemblé la première face de la coque et le deuxième élément de centrage et/ou de fixation de porte est assemblé sur la deuxième face de la coque.

De manière avantageuse, la coque est situé en dessous, verticalement parlant, d'une frontière formant ligne ou bande de contact entre la première porte et la deuxième porte (les deux portes n'étant en effet séparées par aucun pied milieu).

Par surface sensiblement verticale on entend que la normale à la surface forme un angle d'au plus 30° avantageusement d'au plus 20°, par rapport à un plan géométrique horizontal.

Les deux faces sensiblement verticales peuvent être reliées par au moins une troisième portion de surface longeant un côté sensiblement horizontal de chacune des deux faces, et longeant également un côté sensiblement vertical de chacune des deux faces.

Le côté sensiblement horizontal, respectivement sensiblement vertical, peut être dans certains modes de réalisation, juste un côté localement tangent à une direction verticale, respectivement à une direction horizontale, ou encore localement tangent à une direction formant un angle inférieur ou égal à 30° par rapport auxdites directions horizontale et verticale.

Avantageusement, le côté de caisse comporte un flanc de tôle percé d'une ouverture, la pièce rapportée étant monté insérée au travers de l'ouverture à partir du côté intérieur du côté de caisse. Par côté intérieur on entend le côté intérieur par rapport à la position de l'habitacle de la voiture.

De manière préférentielle, le flanc peut comporter, au bord de l'ouverture, un bord plié comportant une portion de plan formant une butée par rapport à la direction d'avancement du véhicule, et la pièce rapportée peut être assemblée de manière à s'appuyer sur la portion de plan. Avantageusement, la coque vient appuyer plan sur plan une portion d'une des faces sensiblement verticales contre la portion de plan du bord plié.

La coque peut comporter en outre un premier rebord longeant au moins une portion d'une des faces verticales. Elle peut comporter un deuxième rebord longeant au moins une portion de l'autre des faces verticales. Le premier et le deuxième rebord peuvent avantageusement former un angle par rapport aux faces verticales écartant ces rebords vers l'extérieur de la coque. Ainsi les rebords peuvent venir en appui contre les bords de l'ouverture pour une profondeur donnée d"insertion de la pièce rapportée dans l'ouverture. Avantageusement, la coque peut comporter un troisième rebord longeant la troisième portion de surface, venant également bloquer la pièce pour une profondeur donnée d'insertion dans l'ouverture.

Selon un mode de réalisation particulier, la coque peut être formée par ajout local de matière puis emboutissage ou formage pour être monobloc avec le côté de caisse. Avantageusement, la portion de coque est localement plus épaisse (au moins 1,25 fois plus épaisse) que le côté de caisse autour de la portion de coque.

Quelques buts, caractéristiques et avantages de l'invention apparaîtront à la lecture de la description suivante, donnée uniquement à titre d'exemple non limitatif, et faite en référence aux figures annexées sur lesquelles :
- La figure 1 est une vue, par le côté d'un véhicule, d'un ensemble latéral de carrosserie selon l'invention ;
- La figure 2 est une vue de détail, en perspective, d'une partie de l'ensemble latéral de la figure 1, observé à partir du même côté latéral du véhicule ;
- La figure 3 est une vue éclatée, en perspective schématique, de quelques composants de l'ensemble latéral des figures 1 et 2 ;
- La figure 4 est une vue, en perspective schématique, du sous-ensemble de la figure 3 en position partiellement assemblée ;
- La figure 5 est une vue d'un sous-ensemble appartenant à l'ensemble latéral des figures 1 à 4, avant son assemblage dans l'ensemble latéral des figures 1 à 4.

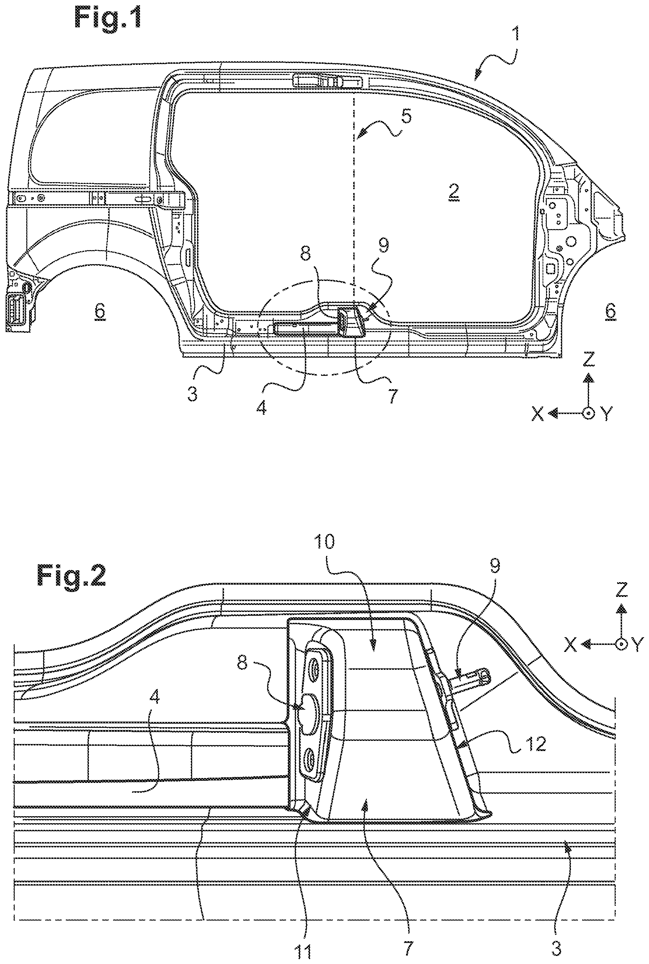

Tel qu'illustré sur la figure 1, en ensemble latéral de carrosserie pour véhicule automobile, référencé 1, est ici montré dans un repère lié au véhicule comprenant un axe horizontal X dirigé vers l'arrière du véhicule, un axe transversal Y et un axe vertical Z dirigé vers le haut. Cet ensemble latéral comprend une portion de côté de caisse 3 entourant une ouverture formant une baie double 2 destinée à recevoir deux portes latérales du véhicule (non représentées), les deux portes étant conçues pour se refermer l'une contre l'autre le long d'une ligne fictive 5 définie au niveau d'une zone vide de la baie double 2. La baie double 2 n'est donc interrompue par aucun pied milieu, qui viendrait, sinon, joindre un rebord inférieur et un rebord supérieur de la baie double 2.

On peut typiquement choisit de recourir à une telle baie double, pour un véhicule comprenant une porte avant battante s'ouvrant par rotation autour d'un axe sensiblement vertical situé vers l'avant de la baie double, et comprenant en outre une porte latérale coulissante venant se refermer en coulissant, suivant une direction proche de celle de l'axe X, contre la porte battante avant.

Dans l'exemple illustré la baie double 2 est typiquement située entre deux passages de roue 6, dont l'un correspond à une roue avant, et l'autre correspond à une roue arrière du véhicule. Pour guider le déplacement de la porte coulissante arrière (non représentée), le côté de caisse 3 porte un rail inférieur de guidage 4 s'étendant en arrière de la ligne fictive de rencontre 5 des portes. L'ensemble latéral comprend une pièce rapportée 7 assemblée sur le côté de caisse 3, de manière à venir former un relief dépassant du côté de caisse 3 vers l'extérieur, latéralement parlant, du véhicule, suivant la direction Y, et dépassant verticalement suivant la direction Z en direction du centre de l'ouverture de la baie double 2.

Sur la pièce rapportée 7 sont montés un premier élément de centrage 8 destiné à centrer -et éventuellement à verrouiller- la porte coulissante arrière (non représentée), et un deuxième élément de centrage 9, disposé sensiblement de l'autre côté -par rapport à l'axe avant arrière X du véhicule- du relief formé par la pièce rapportée 7, et destiné à permettre le verrouillage et/ou le centrage de la porte latérale avant (non représentée) destinée à la même baie double 2.

Ainsi, en utilisant une pièce rapportée de dimensions limitées par rapport aux dimensions générales du côté de caisse 3, ladite pièce portant des éléments de centrage et/ou de fixation vitaux pour obtenir un bon positionnement relatif entre les deux portes, on limite les dérives dimensionnelles.

Une partie des organes d'accrochage permettant d'assembler les éléments de centrage 8 et 9 sur la pièce 7 peuvent être positionnés avant même d'assembler la pièce rapportée 7 sur le côté de caisse 3. On simplifie ainsi l'assemblage et le positionnement des éléments de centrage sur les portions de tôle qui doivent les accueillir.

On retrouve sur la figure 2 des éléments communs à la figure 1, les mêmes éléments étant désignés par les mêmes références. Comme on le voit plus distinctement sur la figure 2, la pièce rapportée 7 comprend une portion de coque creuse 10 se détachant en relief vers l'extérieur du véhicule par rapport au côté de caisse 3, de manière à définir une première face sensiblement verticale 11 de la coque, et une deuxième face sensiblement verticale 12 de la coque, faisant face à la première. Le premier élément de centrage/verrouillage fixation 8 et le deuxième élément de centrage/fixation 9 sont assemblés sur les faces sensiblement verticales respectivement 11 et 12.

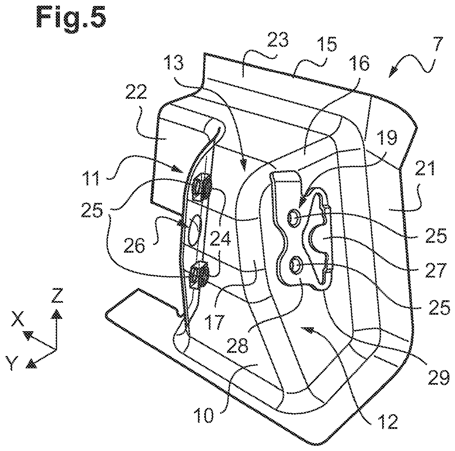

A titre d'exemple, le premier élément 8 de centrage/fixation comporte ici une plaque vissée sur des écrous 24(visibles sur la figure 5), soudés sur une face intérieure de la coque 10, et qui comporte un orifice de centrage dans lequel peut venir s'introduire un ergot de la porte coulissante lorsque celle-ci termine sa trajectoire de déplacement sensiblement suivant l'axe X.

Le premier élément de centrage 8 permet ainsi de centrer la porte coulissante à la fois suivant les axes Y transversal, Z vertical. Le deuxième élément de centrage 9 peut par exemple comporter une gâche permettant d'accrocher une pince de verrouillage de la porte avant (non représentée). Lors de ce verrouillage, s'effectue également t un centrage de la porte avant suivant les axes Y et Z. le deuxième élément de centrage est monté sur une plaquette réglable (visible en figure 5) préassemblée ici sur une face intérieure de la coque 10.

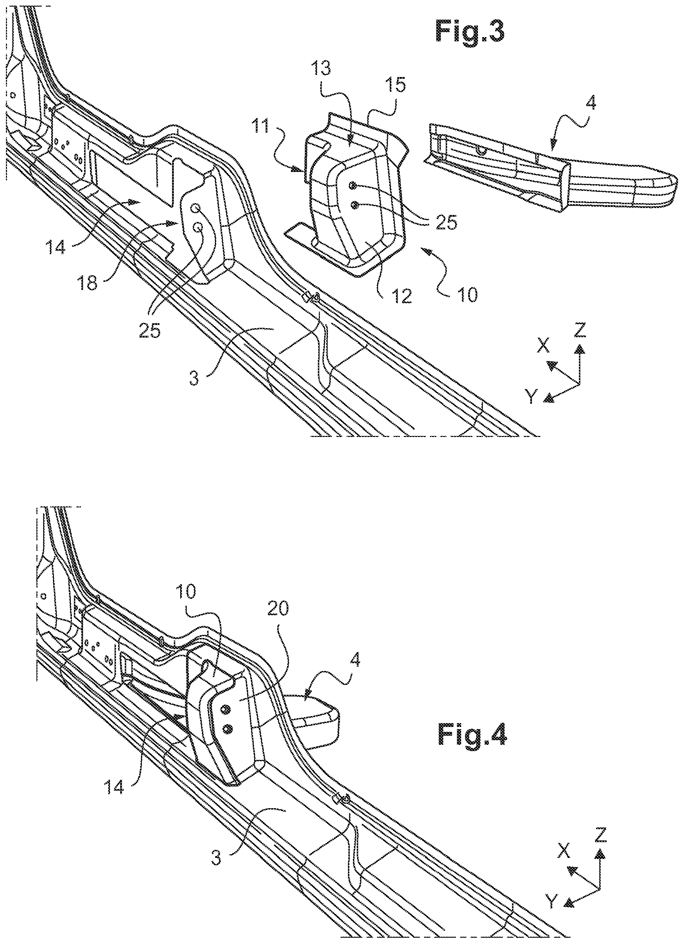

Les figures 3 et 4 montrent le principe de l'assemblage de la pièce rapportée 7 sur le côté de caisse 3. Comme visible sur la figure 3, le côté de caisse 3 est percé d'une ouverture 18 configurée pour pouvoir insérer, en travers de cette ouverture, à partir du côté intérieur du véhicule, la portion de coque creuse 10 de la pièce rapportée 7. La pièce rapportée 7 vient ainsi dépasser, notamment suivant l'axe Y, vers l'extérieur du véhicule, à partir d'un pourtour de l'ouverture 18. Dans l'exemple illustré, l'ouverture 18 rejoint une ouverture 14 derrière laquelle est assemblé le rail inférieur de guidage 4 de la porte latérale coulissante arrière (non représenté). Un élément de guidage (non représenté) de la porte coulissante arrière peut ainsi venir s'insérer dans le rail à partir du côté latéral extérieur du côté de caisse 3.

L'ouverture 18 du côté de caisse 3 est bordée par un bord plié 20 formant un plan d'appui dans un plan sensiblement parallèle au plan géométrique Y-Z. L'une des faces sensiblement verticales, ici la face 12, de la portion de coque 10 peut ainsi venir en appui sur plan sur plan contre le bord plié 20. La face d'appui 12 de la coque 10 et le bord plié 20 peuvent être percés d'orifices d'assemblage 25 permettant par exemple de solidariser le bord plié 20 et la face d'appui 12, au moyen d'organes d'assemblage pouvant également servir à fixer l'un des éléments de centrage 8 ou 9.

La portion de coque 10 peut être avantageusement percée, avant son assemblage sur le côté de caisse 3, d'orifices d'assemblage dédiés au montage du premier élément de centrage, et être également percée d'orifices d'assemblage 25 dédiés au deuxième élément de centrage. Les orifices étant percés sur une pièce de dimension réduite (par opposition aux dimensions du côté de caisse 3), la précision des positions relatives des orifices dédiés au premier élément de centrage et des orifices dédiés au deuxième élément de centrage peut être ainsi améliorée.

De manière avantageuse, pour ménager un volume intérieur à la coque 10 permettant d'accéder aux faces intérieures de la coque correspondant aux faces extérieures 11 et 12, les faces 11 et 12 sont séparées par une troisième portion de surface 13. La troisième portion de surface 13 longe au moins un côté sensiblement horizontal 16 et au moins un côté sensiblement vertical 17 de chacune des deux faces 11 et 12. On ménage ainsi à l'intérieur de la coque 10 un volume d'accessibilité suffisant pour effectuer le montage d'élément de pré positionnement et d'assemblage centrés à l'aide des orifices 25.

L'une des faces 11 peut être en outre percée, préalablement au montage de la pièce rapporté sur le côté de caisse, d'un orifice de centrage 26 permettant d'accueillir un ergot de centrage d'une porte coulissante. Là encore, la réalisation de l'orifice de centrage 26 sur une pièce de dimension réduite permet d'améliorer la précision dimensionnelle du positionnement relatif de la porte avant et de la porte arrière, destinées à la baie double.

Tel que visible sur la figure 5, les orifices 25 peuvent accueillir par exemple des écrous de fixation 24 soudés à l'intérieur de la portion de coque creuse 10, et destinés à accueillir des vis de fixation du premier élément de centrage 8. Conjointement aux écrous soudés, ou indépendamment de ceux-ci, une des faces peut comporter une plaquette réglable 19 comportant des orifices de fixation destinés à être positionnés sensiblement en regard des orifices 25 de la coque 10. Une telle plaquette réglable comporte par exemple une portion de pré maintien 27 et une portion d'assemblage 28, reliées entre elles par des languettes plastiquement déformables 29.

Pour faciliter le positionnement de la pièce rapportée 7 par rapport au côté de caisse 3, le pourtour 15 de la coque 10 comporte un premier rebord plié 21, plié de manière à venir s'appuyer plan sur plan sur le pourtour de l'ouverture 18, de manière à limiter l'avancement de la coque 10 au travers de l'ouverture 18 suivant l'axe Y.
Le premier rebord 21 est ici disposé verticalement de manière à longer la deuxième face verticale 12. La coque 10 peut comporter un deuxième bord plié 22 longeant verticalement l'autre des deux faces verticales, ici la face vertical 11.
La coque peut comporter un troisième bord plié 23 s'étendant sensiblement suivant une direction horizontale, perpendiculairement aux faces verticales 11 et 12.
Le premier bord plié 21, le deuxième bord plié 22, et le troisième bord plié 23 comprennent chacun avantageusement au moins une portion s'étendant dans un plan sensiblement perpendiculaire à l'axe Y, de manière à imposer la position d'avancement maximal de la coque 10 au travers de l'ouverture 18.
Les rebords 21, 22, 23 peuvent éventuellement servir de zones de soudure pour souder la pièce rapportée 7 sur le bord de caisse 3.

L'ensemble latéral de carrosserie selon l'invention permet de sécuriser à la fois la précision de positionnement et la solidité mécanique des éléments de fixation destinés à centrer et à verrouiller les portes du véhicule. En utilisant une pièce rapportée 7, on peut en effet faire varier l'épaisseur de tôle entre la pièce rapportée et le bord de caisse 3, et ainsi bénéficier d'une rigidité accrue au niveau des zones de maintien des éléments de centrage destinés à centrer et verrouiller les portes du véhicule.

L'invention ne se limite pas aux exemples de réalisation décrits, et peut se décliner en de nombreuses variantes. La pièce rapportée peut être interposée entre deux portes battantes du véhicule, voire entre deux portes coulissantes de véhicule. L'orifice 18 accueillant la pièce rapportée peut comporter un bord plié s'étendant suivant un plan autre que vertical. Il peut éventuellement comporter plusieurs bords pliés, par exemple disposés dans des plans perpendiculaires l'un à l'autre, ou disposés suivant deux plans sensiblement parallèles de part et d'autre de l'ouverture 18. Dans certains modes de réalisation, un élément de centrage ou de verrouillage de la porte peut être préassemblé sur la pièce rapportée 7, avant même que celle-ci ne soit solidarisée avec le côté de caisse 3.

La pièce rapportée peut dépasser du côté de caisse vers le centre de l'orifice la baie en formant un relief par rapport au côté de caisse, qui n'est pas un relief en latéral vers l'extérieur du véhicule. La pièce rapportée pourrait dépasser du côté de caisse vers le haut (si elle se trouve sous la baie double) ou vers le bas (si elle se trouve au dessus de la baie double) sans traverser de portion verticale du côté de caisse. Selon une autre variante de réalisation, La pièce rapportée 3 pourrait dépasser du côté de caisse vers l'extérieur du véhicule, sans traverser de portion horizontale du côté de caisse.

On peut enfin envisager des variantes de réalisation selon lesquelles le côté de caisse lui-même comporterait une portion de coque creuse comportant deux faces parallèles accueillant chacune un élément de centrage et/ou de fixation de deux portes différentes sans pied milieu, la portion de coque creuse comportant là aussi des orifices d'assemblage réalisés au travers des deux faces parallèles préalablement au montage de la coque creuse, donc ici du côté de caisse, sur le véhicule. Ce mode de réalisation peut être par exemple intéressant si le côté de caisse 3 est réalisé dans un matériau de type composite à matrice polymère. Ce mode de réalisation pourrait correspondre à la figure 4 en interprétant la portion 10 représentée comme étant une portion du côté de caisse 3.

## Revendications

1. Ensemble latéral (1) de carrosserie pour véhicule automobile, comprenant un côté de caisse (3) avec une baie double (2), destinée à recevoir conjointement deux portes latérales du véhicule se refermant l'une contre l'autre sans pied milieu au niveau d'une zone vide de la baie double (2), **caractérisé en ce que** l'ensemble comprend :
- une pièce, rapportée (7) sur le côté de caisse (3) au dessus de la baie (2), ou une pièce rapportée sur le côté de caisse en dessous de la baie (2), solidarisée au côté de caisse (3) pour dépasser du côté de caisse (3),
- un premier élément (8) de centrage et/ou de fixation de porte assemblé sur la pièce rapportée (7),
- un deuxième élément (9) de centrage et/ou de fixation de porte assemblé sur la pièce rapportée (7),
la pièce rapportée (7) étant assemblée sur le côté de caisse (3) de manière à permettre de refermer puis verrouiller et/ou de centrer une première porte sur le premier élément(8), et de manière à permettre de refermer puis verrouiller et/ou de centrer une deuxième porte sur le deuxième élément (9), le premier élément (8) de centrage et/ou de fixation étant un élément de centrage destiné à une porte coulissante, et le deuxième élément (9) de centrage et/ou de fixation est un élément permettant de verrouiller une porte battante.

2. Ensemble latéral selon la revendication 1, **caractérisé en ce que** :
- la pièce rapportée (7) comporte une portion de coque creuse (10), dépassant en relief latéralement vers l'extérieur du côté de caisse (3), notamment par une première face (11) de la coque et par une deuxième face (12) de la coque, les deux faces (11, 12) étant sensiblement verticales et tournées à l'opposé l'une de l'autre,
- le premier élément (8) de centrage et/ou de fixation de porte est assemblé la première face (11) de la coque;
- le deuxième élément (9) de centrage et/ou de fixation de porte est assemblé sur la deuxième face (12) de la coque.

3. Ensemble latéral selon la revendication 2, **caractérisé en ce que** les deux faces (11, 12) sensiblement verticales sont reliées par au moins une troisième portion (13) de surface longeant un côté sensiblement horizontal (16) de chacune des deux faces, et longeant également un côté sensiblement vertical (17) de chacune des deux faces (11, 12).

4. Ensemble latéral selon l'une quelconque des revendications précédentes, **caractérisé en ce que** le côté de caisse (3) comporte un flanc de tôle percé d'une ouverture (18), la pièce rapportée (7) étant monté insérée au travers de l'ouverture (18) à partir du côté intérieur du côté de caisse (3).

5. Ensemble latéral selon la revendication 4, **caractérisé en ce que** le flanc comporte, au bord de l'ouverture (18), un bord plié (20) comportant une portion de plan formant une butée par rapport à la direction (X) d'avancement du véhicule, et la pièce rapportée (7) est assemblée de manière à s'appuyer sur la portion de plan.

6. Ensemble latéral selon la revendication 2, ou selon l'une quelconque des revendications 3 à 5 combinée à la revendication 2, **caractérisé en ce que** la coque (10) comporte en outre un premier rebord (21) longeant au moins une portion d'une des face verticale (11), et comporte un deuxième rebord (22) longeant au moins une portion de l'autre des faces verticales (12), le premier (21) et le deuxième (22) rebord formant chacun un angle, orienté vers l'extérieur de la coque (10), par rapport à la face verticale qu'il longe.

7. Ensemble latéral selon l'une quelconque des revendications précédentes, **caractérisé en ce que** la pièce rapportée (7) est positionnée au voisinage de l'extrémité d'un rail (4) de guidage horizontal destiné à supporter une des portes.

8. Ensemble latéral selon la revendication 2, **caractérisé en ce que** la coque (10) est formée par ajout local de matière sur une ébauche du côté de caisse, puis emboutissage ou formage, pour être monobloc avec le côté de caisse.

9. Procédé d'assemblage d'un véhicule sans pied milieu, **caractérisé en ce qu'**il comprend notamment les étapes suivantes :
- fournir une portion de côté de caisse (3),
- fournir une portion de coque creuse (10) configurée pour venir former un relief par rapport au côté de caisse (3) et configurée pour supporter un premier élément (8) de centrage et/ou de fixation de porte, ainsi que pour supporter un deuxième élément (9) de centrage et/ou de fixation de porte, destiné à une porte contiguë,
- percer dans la portion de coque creuse (10), des orifices (25) permettant de positionner les éléments de centrage (8, 9),
- assembler la portion de coque creuse (10) sur la portion de côté de caisse (3),
- assembler le côté de caisse (3) sur le véhicule, le perçage des orifices (25) étant effectué avant l'assemblage de la portion de coque creuse (10) sur le véhicule.

## Patentansprüche

1. Seitliche Anordnung (1) einer Karosserie für ein Kraftfahrzeug, welche eine Karosserieseite (3) mit einer doppelten Öffnung (2) umfasst, die dazu bestimmt ist, zwei Seitentüren des Fahrzeugs gemeinsam aufzunehmen, die sich einander gegenüber ohne Mittelsäule an einem leeren Bereich der doppelten Öffnung (2) schließen, **dadurch gekennzeichnet, dass** die Anordnung umfasst:
- ein Teil (7), das oberhalb der Öffnung (2) an die Karosserieseite (3) angesetzt ist, oder ein Teil, das unterhalb der Öffnung (2) an die Karosserieseite angesetzt ist, und das fest mit der Karosserieseite (3) verbunden ist, so dass es über die Karosserieseite (3) hinausragt,
- ein erstes Element (8) zur Zentrierung und/oder Befestigung einer Tür, das an dem angesetzten Teil (7) montiert ist,
- ein zweites Element (9) zur Zentrierung und/oder Befestigung einer Tür, das an dem angesetzten Teil (7) montiert ist,
wobei das angesetzte Teil (7) so an der Karosserieseite (3) montiert ist, dass es ermöglicht, eine erste Tür zu schließen und danach an dem ersten Element (8) zu verriegeln und/oder zu zentrieren, und so, dass es ermöglicht, eine zweite Tür zu schließen und danach an dem zweiten Element (9) zu verriegeln und/oder zu zentrieren, wobei das erste Element (8) zur Zentrierung und/oder Befestigung ein Zentrierelement ist, das für eine Schiebetür bestimmt ist, und das zweite Element (9) zur Zentrierung und/oder Befestigung ein Element ist, welches ermöglicht, eine Schwingtür zu verriegeln.

2. Seitliche Anordnung nach Anspruch 1, **dadurch gekennzeichnet, dass**:
- das angesetzte Teil (7) einen hohlen Schalenabschnitt (10) aufweist, der seitlich nach außen erhaben über die Karosserieseite (3) hinausragt, insbesondere durch eine erste Seitenfläche (11) der Schale und durch eine zweite Seitenfläche (12) der Schale, wobei die zwei Seitenflächen (11, 12) im Wesentlichen vertikal sind und voneinander abgewandt sind,
- das erste Element (8) zur Zentrierung und/oder Befestigung einer Tür an der ersten Seitenfläche (11) der Schale montiert ist;
- das zweite Element (9) zur Zentrierung und/oder Befestigung einer Tür an der zweiten Seitenfläche (12) der Schale montiert ist.

3. Seitliche Anordnung nach Anspruch 2, **dadurch gekennzeichnet, dass** die zwei im Wesentlichen vertikalen Seitenflächen (11, 12) durch wenigstens einen dritten Oberflächenabschnitt (13) verbunden sind, der sich entlang einer im Wesentlichen horizontalen Seite (16) jeder der zwei Seitenflächen erstreckt und sich auch entlang einer im Wesentlichen vertikalen Seite (17) jeder der zwei Seitenflächen (11, 12) erstreckt.

4. Seitliche Anordnung nach einem der vorhergehenden Ansprüche, **dadurch gekennzeichnet, dass** die Karosserieseite (3) eine mit einer Öffnung (18) versehene Blechplatine aufweist, wobei das angesetzte Teil (7) montiert ist, indem es von der Innenseite der Karosserieseite (3) aus durch die Öffnung (18) hindurch eingesetzt ist.

5. Seitliche Anordnung nach Anspruch 4, **dadurch gekennzeichnet, dass** die Platine am Rand der Öffnung (18) einen umgebogenen Rand (20) aufweist, der einen ebenen Abschnitt aufweist, welcher einen Anschlag in Bezug auf die Fahrtrichtung (X) des Fahrzeugs bildet, und das angesetzte Teil (7) so montiert ist, dass es sich an dem ebenen Abschnitt abstützt.

6. Seitliche Anordnung nach Anspruch 2 oder nach einem der Ansprüche 3 bis 5 in Verbindung mit Anspruch 2, **dadurch gekennzeichnet, dass** die Schale (10) außerdem eine erste Randleiste (21) aufweist, die sich entlang wenigstens eines Abschnitts einer der vertikalen Seitenflächen (11) erstreckt, und eine zweite Randleiste (22) aufweist, die sich entlang wenigstens eines Abschnitts der anderen der vertikalen Seitenflächen (12) erstreckt, wobei die erste (21) und die zweite (22) Randleiste jeweils einen Winkel bilden, der in Bezug auf die vertikale Seitenfläche, an der entlang sie sich erstreckt, zur Außenseite der Schale (10) gerichtet ist.

7. Seitliche Anordnung nach einem der vorhergehenden Ansprüche, **dadurch gekennzeichnet, dass** das angesetzte Teil (7) in der Nähe des Endes einer horizontalen Führungsschiene (4) positioniert ist, die dazu bestimmt ist, eine der Türen zu stützen.

8. Seitliche Anordnung nach Anspruch 2, **dadurch gekennzeichnet, dass** die Schale (10) durch lokalen Zusatz von Material auf einem Rohling der Karosserieseite und anschließendes Tiefziehen oder Formen gebildet wird, so dass sie mit der Karosserieseite einstückig ausgebildet ist.

9. Verfahren zur Montage eines Fahrzeugs ohne Mittelsäule, **dadurch gekennzeichnet, dass** es insbesondere die folgenden Schritte umfasst:
- Bereitstellen eines Karosserieseitenabschnitts (3),
- Bereitstellen eines hohlen Schalenabschnitts (10), der dafür ausgelegt ist, dann eine Erhebung in Bezug auf die Karosserieseite (3) zu bilden, und dafür ausgelegt ist, ein erstes Element (8) zur Zentrierung und/oder Befestigung einer Tür zu tragen sowie ein zweites Element (9) zur Zentrierung und/oder Befestigung einer Tür zu tragen, das für eine angrenzende Tür bestimmt ist,
- Bohren von Öffnungen (25) in dem hohlen Schalenabschnitt (10), die es ermöglichen, die Zentrierelemente (8, 9) zu positionieren,
- Montieren des hohlen Schalenabschnitts (10) an dem Karosserieseitenabschnitt (3),
- Montieren der Karosserieseite (3) am Fahrzeug, wobei das Bohren der Öffnungen (25) vor dem Montieren des hohlen Schalenabschnitts (10) am Fahrzeug durchgeführt wird.

## Claims

1. Bodywork side assembly (1) for a motor vehicle, comprising a body shell side (3) with a double aperture (2), intended to receive conjointly two side doors of the vehicle which close against one another with no centre pillar in an empty region of the double aperture (2), **characterized in that** the assembly comprises:
- a part (7) attached to the body shell side (3) above the aperture (2), or a part attached to the body shell side below the aperture (2), secured to the body shell side (3) so as to project from the body shell side (3),
- a first door centring and/or securing element (8) affixed to the attached part (7),
- a second door centring and/or securing element (9) affixed to the attached part (7),
the attached part (7) being affixed to the body shell side (3) in such a way as to make it possible to close then lock and/or centre a first door on the first element (8), and in such a way as to make it possible to close then lock and/or centre a second door on the second element (9), the first centring and/or securing element (8) being a centring element intended for a sliding door, and the second centring and/or securing element (9) is an element that makes it possible to lock a swinging door.

2. Side assembly according to Claim 1, **characterized in that**:
- the attached part (7) comprises a hollow case portion (10), that projects in relief laterally towards the outside of the body shell side (3), in particular with a first face (11) of the case and with a second face (12) of the case, the two faces (11, 12) being essentially vertical and having opposite orientations to one another,
- the first door centring and/or securing element (8) is affixed to the first face (11) of the case;
- the second door centring and/or securing element (9) is affixed to the second face (12) of the case.

3. Side assembly according to Claim 2, **characterized in that** the two essentially vertical faces (11, 12) are connected by at least one third surface portion (13) running along an essentially horizontal side (16) of each of the two faces, and also running along an essentially vertical side (17) of each of the two faces (11, 12).

4. Side assembly according to any one of the preceding claims, **characterized in that** the body shell side (3) comprises a sheet metal flank in which an opening (18) is created, the attached part (7) being mounted inserted through the opening (18) from the inner side of the body shell side (3).

5. Side assembly according to Claim 4, **characterized in that** the flank comprises, at the opening (18), a bent edge (20) comprising a plane portion that forms an abutment with respect to the direction (X) of advance of the vehicle, and the attached part (7) is affixed so as to press against the plane portion.

6. Side assembly according to Claim 2, or according to any one of Claims 3 to 5 when combined with Claim 2, **characterized in that** the case (10) further comprises a first rim (21) running along at least one portion of one of the vertical faces (11), and comprises a second rim (22) running along at least one portion of the other of the vertical faces (12), the first rim (21) and the second rim (22) each forming an angle, oriented towards the outside of the case (10), relative to the vertical face along which it runs.

7. Side assembly according to any one of the preceding claims, **characterized in that** the attached part (7) is positioned close to the end of a horizontal guiding rail (4) that is intended to support one of the doors.

8. Side assembly according to Claim 2, **characterized in that** the case (10) is formed by local addition of material onto a blank of the body shell side, then stamping or forming so as to be integral with the body shell side.

9. Method for assembling a vehicle having no centre pillar, **characterized in that** it comprises in particular the following steps:
- providing a portion of a body shell side (3),
- providing a hollow case portion (10) that is configured to form a relief relative to the body shell side (3) and is configured to support a first door centring and/or securing element (8), and to support a second door centring and/or securing element (9), intended for an adjoining door,
- creating, in the hollow case portion (10), orifices (25) that make it possible to position the centring elements (8, 9),
- affixing the hollow case portion (10) to the portion of the body shell side (3),
- affixing the body shell side (3) to the vehicle, the creation of the orifices (25) being done prior to the affixing of the hollow case portion (10) to the vehicle.
